Europäisches Patentamt

European Patent Office

Office européen des brevets

(19)

(11) **EP 0 702 465 A1**

(12) # DEMANDE DE BREVET EUROPEEN

(43) Date de publication:
20.03.1996 Bulletin 1996/12

(51) Int. Cl.⁶: **H04J 3/07**

(21) Numéro de dépôt: 95202420.6

(22) Date de dépôt: 07.09.1995

(84) Etats contractants désignés:
**DE FR GB IT**

(30) Priorité: **13.09.1994 FR 9410909**

(71) Demandeurs:
• **T.R.T. TELECOMMUNICATIONS RADIOELECTRIQUES ET TELEPHONIQUES**
**F-75013 Paris (FR)**
Etats contractants désignés:
**FR**

• **PHILIPS ELECTRONICS N.V.**
**NL-5621 BA Eindhoven (NL)**
Etats contractants désignés:
**DE GB IT**

(72) Inventeurs:
• **Vergnes, Alain**
**F-75008 Paris (FR)**
• **Albert, Patrick**
**F-75008 Paris (FR)**

(74) Mandataire: **Chaffraix, Jean**
**Société Civile S.P.I.D.**
**156, Boulevard Haussmann**
**F-75008 Paris (FR)**

(54) **Système de transmission et équipement de multiplexage-démultiplexage impliquant un flux d'éléments binaires pouvant être justifié**

(57) Pour ce système et pour cet équipement, on a prévu un dispositif de remise en phase (30) muni d'un accès de données entrantes (50) au rythme d'un premier signal d'horloge appliqué à un accès (51) et d'un accès (70) pour fournir au rythme d'un deuxième signal d'horloge appliqué à un accès (71), un flux de données pouvant être justifié dans lequel des éléments binaires peuvent être insérés ou supprimés. Les données sont inscrites et lues dans une mémoire commune (60) au moyen d'un compteur d'écriture (55) et d'un compteur de lecture (80) respectivement. Un organe de comparaison (90) mesure la différence des contenus desdits compteurs (55) et (80). A chaque variation de cette différence, on rajoute des pas intermédiaires grâce aux éléments (95), (97) et (98) de sorte que les moyens (92) qui commandent la justification peuvent être constitués par un modulateur sigma-delta de seuil 0,5.

Applications: transmission d'informations par réseaux SDH.

FIG. 4

EP 0 702 465 A1

**Description**

La présente invention concerne un système de transmission impliquant des données transmises à un premier rythme et un flux d'éléments binaires pouvant être justifié transmis à un deuxième rythme, système comportant :

- un accès des données entrantes formées d'éléments binaires fournis au premier rythme d'horloge,
- un accès pour fournir au deuxième rythme d'horloge, ledit flux dans lequel des éléments binaires peuvent être insérés ou supprimés,
- une mémoire tampon
- des moyens d'écriture pour inscrire, à un emplacement d'écriture de la mémoire tampon, les données provenant dudit accès de données entrantes au premier rythme,
- des moyens de lecture pour lire, à un emplacement de lecture de la mémoire tampon, les données emmagasinées au deuxième rythme et pour constituer ledit flux,
- des moyens de comparaison d'emplacements pour fournir un code de comparaison des codes d'emplacement de lecture avec les codes d'emplacement d'écriture,
- des moyens de justification pour insérer et ou supprimer des éléments binaires dans le flux de données sortantes, en fonction du code de comparaison,

L'invention concerne aussi un équipement de multiplexage et de démultiplexage impliquant un flux d'éléments binaires pouvant être justifié.

Un tel système trouve d'importantes applications dans le domaine des transmissions de données, notamment lorsqu'il est utilisé dans les réseaux numériques connus sous le nom de "hiérarchie numérique synchrone" (SDH) et décrits dans les recommandations UIT-T G707, G708, 0709 et autres.

La demande de brevet canadienne n° 2 064 602 décrit bien un système de ce genre.

Dans de tels systèmes, on est confronté au problème dû à la différence de fréquences des oscillateurs qui fixent le premier rythme d'horloge et le deuxième. Pour adapter ces rythmes, on prévoit un dispositif de remise en phase. Cependant, malgré la présence de ce dispositif, il peut subsister des dérives lentes de la phase, ce qui constitue une gigue de fréquences appelée en littérature anglo-saxonne : "wander". Ceci entraîne des distorsions qui peuvent être tolérables en certaines conditions, mais qui peuvent perturber le circuit utilisateur dans d'autres conditions.

Pour résoudre ce problème, l'invention propose un système du genre mentionné dans le préambule remarquable en ce que les moyens de comparaison comportent :

- un organe d'interpolation pour fournir des valeurs intermédiaires entre chaque variation du code de comparaison,

et en ce que les moyens de justification sont munis

- d'un organe de décision présentant un seuil de décision qui est prévu pour commander une justification et dont la valeur peut être une des valeurs intermédiaires.

La description suivante accompagnée des dessins ci-annexés, le tout donné à titre d'exemple non limitatif, fera bien comprendre comment l'invention peut être réalisée.

- La figure 1 montre un système de l'invention.
- La figure 2 montre l'organisation des positions de données d'un conteneur virtuel VC12.
- La figure 3 montre les positions de l'unité d'affluent TU12 dans une multitrame STM1.
- La figure 4 montre un circuit de remise en phase faisant partie du système de l'invention.
- La figure 5 montre, en fonction du temps, les variations et la différence des contenus de compteurs faisant partie du circuit de la figure précédente.
- La figure 6 montre l'évolution de ladite différence des contenus des compteurs.
- La figure 7 montre un schéma de l'organe d'extrapolation.
- La figure 8 est un diagramme temps destiné à l'explication du fonctionnement du circuit montré à la figure 4.
- La figure 9 montre le schéma d'un organe de commande de justification.
- La figure 10 montre les caractéristiques en fréquence des différentes fonctions de transfert.

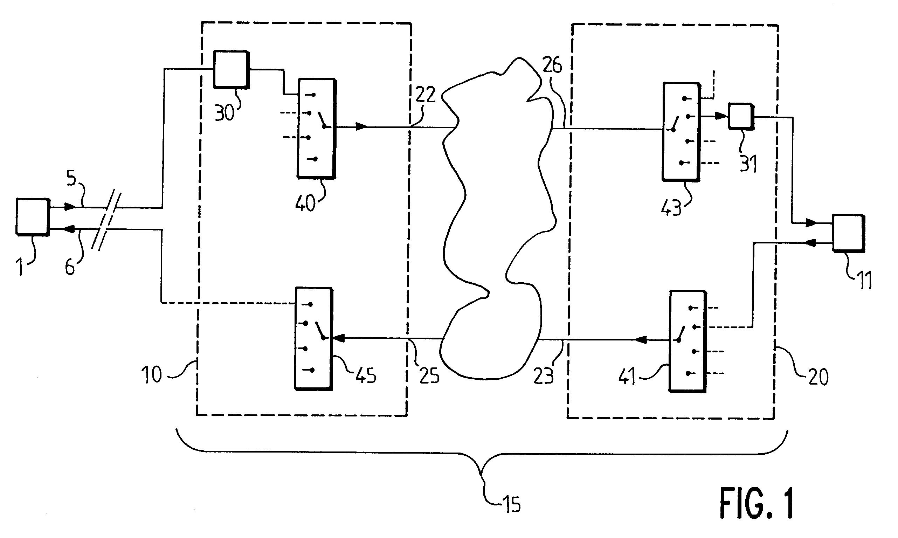

A la figure 1, la référence 1 indique un terminal de données qui émet et reçoit des données à 2 048 kbit/s sur des lignes de transmission 5 et 6 respectivement. Ces lignes se connectent sur un équipement de multiplexage-démultiplexage 10 pour le réseau 15 prévu pour un système connu sous le nom de : "Hiérarchie numérique synchrone" ou en abrégé SDH. Ce terminal 1 peut être mis en communication avec un autre terminal 11 qui est connecté à ce réseau par un autre équipement de multiplexage-démultiplexage 20. Les terminaux 1 et 11 travaillent au rythme d'une horloge de 2,048 MHz dont la précision est de ± 50 ppm. Ces équipements 10 et 20 fournissent, à leur sortie 22 et 23, un multiplex à 155 Mbit/s pour 63 terminaux à 2 048 kbit/s et reçoivent sur leur entrée 25 et 26 un multiplex semblable. Pour simplifier les explications, on a représenté, d'une manière schématique, les équipements de multiplexage-démultiplexage 10 et 11 essentiellement sous la forme de multiplexeurs 40 et 41 pour les équipements 10 et 11 et de démultiplexeurs 43 et 45 pour respectivement les équipements 10 et 11.

Le réseau SDH précité travaille selon une certaine fréquence qui peut différer d'une valeur de ± 20 ppm de celle des terminaux de données 1 et 11 qui, en outre, fonctionnent avec des horloges indépendantes. Pour assurer cette synchronisation, on a prévu, au niveau de l'équipement 10 un circuit de remise en phase ou de synchronisation 30 pour que les données reçues du terminal 10 soient cohérentes avec la fréquence du réseau et, au niveau de l'équipement 20 un circuit de désynchronisation 31 pour que les données fournies soient cohérentes avec celles du terminal 11 qui les reçoit.

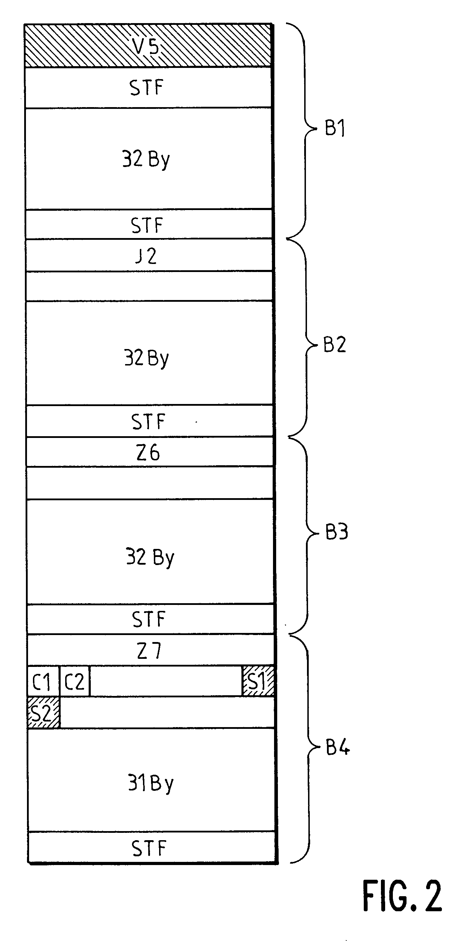

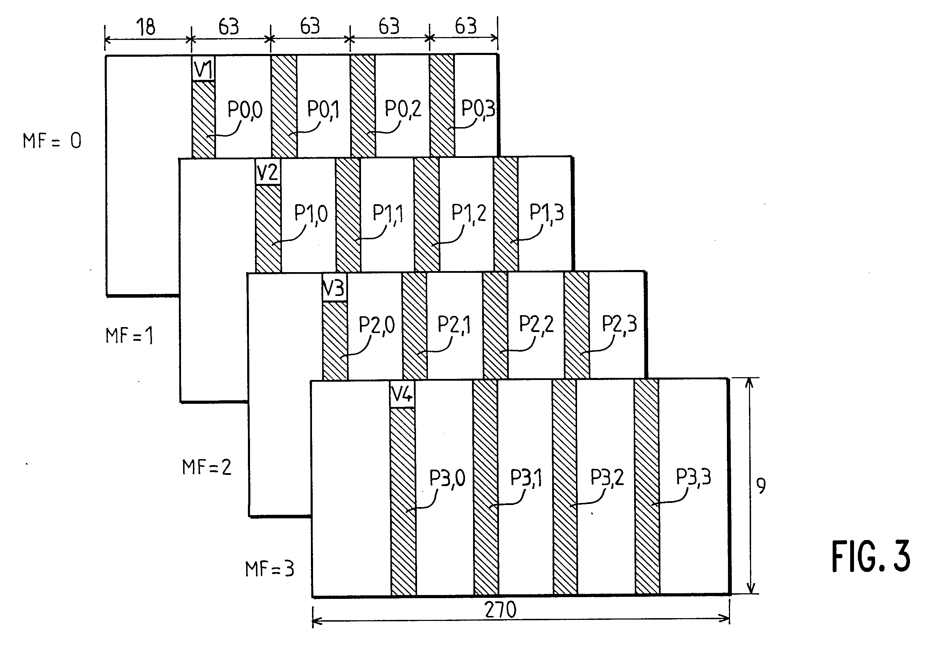

L'exemple de réalisation est plus particulièrement adapté pour le transport du 2 048 kbit/s transporté dans un conteneur virtuel VC12 par une unité d'affluent TU12. La figure 2 montre l'organisation des données dans ce conteneur VC12, tandis que la figure 3 montre un exemple d'une position de l'unité d'affluent TU12 dans une multitrame STM1.

L'unité d'affluent TU12 est formée de 144 octets, ce qui amène 140 octets pour le conteneur VC12, se décomposant en quatre blocs B1, B2, B3 et B4 de 35 octets chacun. On notera que les trois premiers blocs contiennent chacun 32 octets pour l'information utile et le quatrième 32 octets ± 1 bit. Ces octets servent à transporter les éléments binaires utiles provenant des données entrantes à l'accès 50. La variation de ± 1 bit, dont la commande est déterminée par les éléments binaires C1 et C2, est prise sur les emplacements S1 et S2 indiqués sur la figure 2 et constitue ce qu'on appelle la justification.

La multitrame STM1 montrée à la figure 3 est composée de quatre trames MF = 0, MF = 1, MF = 2, MF = 3 et MF = 4. Chacune de ces trames est formée de 2430 octets disposés selon un rectangle de 270 × 9 octets. Les parties hachurées :

P0,0 P0,1 P0,2 P0,3 de la trame MF = 0
P1,0 P1,1 P1,2 P1,3 de la trame MF = 1
P2,0 P2,1 P2,2 P2,3 de la trame MF = 2
P3,0 P3,1 P3,2 P3,3 de la trame MF = 3

contiennent les octets du conteneur virtuel montré à la figure 2. La multitrame montrée sur cette figure 3 est transmise en série en commençant par la trame MF = 0, en la lisant de gauche à droite et de haut en bas. La partie hachurée P0,1 est séparée de 18 octets du bord et les parties hachurées P0,1 P0,2 P0,3 sont séparées de 63 octets entre elles. On transmet 128 octets (en considérant S2 comme un bit de donnée en l'absence de justification) en 500 μs ce qui correspond à un débit de 2 048 kbit/s.

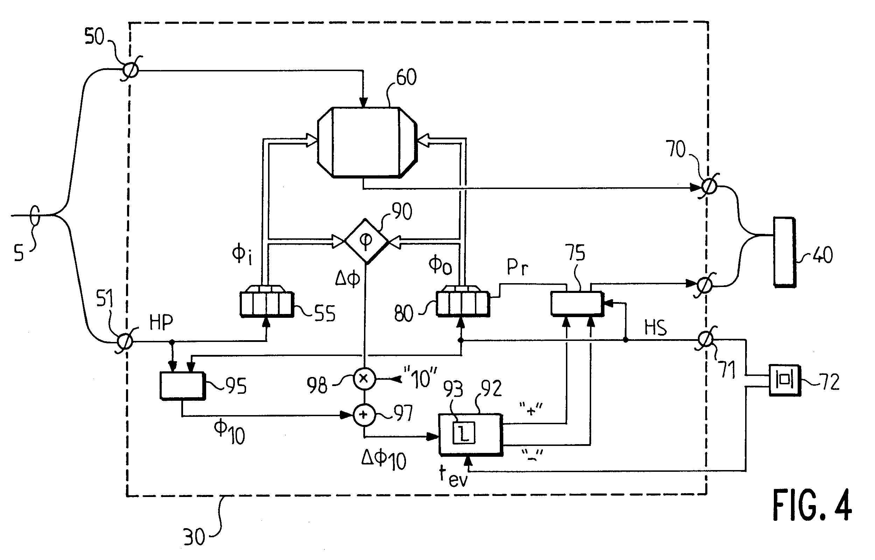

La figure 4 montre le schéma de réalisation du circuit de remise en phase 30. On pourra trouver dans la technique SDH des exemples de réalisation des autres circuits (voir par exemple la demande de brevet canadienne n° 2 064 602 précitée). Sur cette figure 4, la borne 50 reçoit les données de la ligne 5 et la borne 51 les signaux d'horloge HP, dits signaux d'horloge plésiochrones, qui sont associés aux données et dont la fréquence est de 2,048 MHz. Ces signaux d'horloge alimentent essentiellement un compteur d'écriture 55 pour une mémoire tampon 60. Les données lues dans cette mémoire tampon sont restituées à une borne de données 70 au rythme de lecture de signaux d'horloge HS appliqués à une borne 71 dont la fréquence est de 19,44 MHz correspondant à la fréquence des octets émis dans la multitrame STM1. Cette borne 71 est reliée à la sortie d'une horloge 72 faisant partie du système SDH. Un organe de gestion de trames SDH portant la référence 75 fournit, d'une part, les signaux ou les octets de service conformément à la figure 2 vers le multiplexeur 40 et, d'autre part, un signal de prélèvement Pr pour que des données soient prélevées de cette mémoire en correspondance avec leur place dans la multitrame STM1. Le signal Pr de l'organe 75 va autoriser l'incrémentation d'un compteur de lecture 80 de la mémoire 60. Ce compteur 80 compte alors les impulsions du signal d'horloge HS disponibles à la borne 71 tant que le signal Pr l'y autorise. En moyenne, la fréquence de comptage sera évidemment celle de l'affluent entrant : 2,048 MHz ± 50 ppm. Un organe de comparaison de phase 90 analyse en permanence les contenus $\Phi i$ et $\Phi o$ des compteurs 55 et 80. Le résultat de cette comparaison $\Delta\Phi$ est donné par la formule :

$$\Delta\Phi = \{(\Phi i - \Phi o + M)_{\text{mod } M} - (M/2)\}$$

où M est la capacité totale en bits de la mémoire 60. On constatera que $\Delta\Phi = 0$ pour $(\Phi i - \Phi o + M)_{\text{mod } M} = M/2$. On garantit ainsi que les adresses de lecture et d'écriture soient suffisamment séparées pour éviter une écriture et une lecture simultanées dans le même emplacement de la mémoire 60.

A partir de ce résultat, un circuit de commande de justification 92 détermine si une justification éventuelle peut être entreprise. Cette commande de justification est envoyée à l'organe de gestion 75. Le circuit de commande de justification 92 traite le résultat du circuit de comparaison 90 au moyen d'un circuit à seuil 93 et dès que celui-ci indique une trop grande différence entre les contenus des deux compteurs 55 et 88 on déclenche une justification. Par exemple soit on ajoute un élément binaire dans le flux de données, l'élément binaire S1 fait alors partie des données utiles à transmettre, soit on en supprime un, les éléments binaire S1 et S2 ne font donc pas partie des données utiles à transmettre.

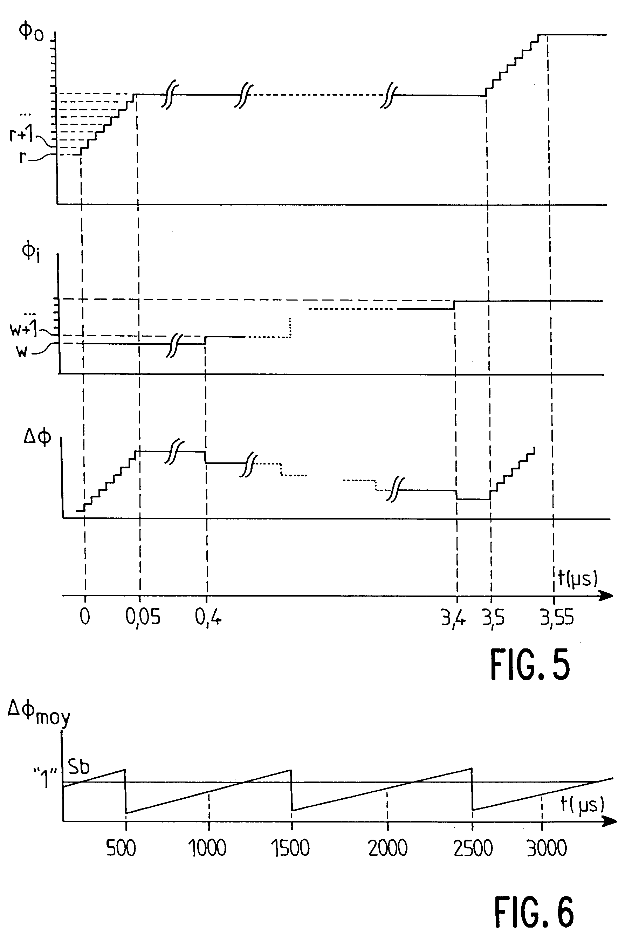

La figure 5 montre comment évoluent les contenus $\Phi i$ et $\Phi o$ des compteurs 55 et 80 ainsi que leurs différences. Le contenu $\Phi o$ du compteur 80 évolue en fonction de la multitrame employée. Ainsi entre des temps notés, d'une façon arbitraire, 0 - 0,05 μs le contenu $\Phi o$ augmente de 8 unités et entre les temps 0,05 - 3,5 μs, ce contenu ne change pas. Puis entre les temps 3,5 - 3,55 μ, à nouveau ce contenu change de 8 unités. Le contenu $\Phi i$ du compteur 55 change, d'une manière uniforme, d'une unité toutes les 0,5 μs ou plus exactement 0,488 μs (= 1/2,048 Mhz) soit aux instants 0,4 ... 3,4 μs. Les variations de la différence $\Delta\Phi$ de ces contenus se déduisent de ce qui vient d'être dit. Après un accroissement de huit unités, cette différence diminue d'une unité toutes les 0,488 µs.

L'erreur de cette différence est analysée toutes les 500 µs exactement en des temps $t_{ev}$ fixés par l'horloge 72 (voir figure 6). C'est pendant cette durée de 500 µs exactement que le nombre d'éléments binaires inscrits dans la mémoire 60 doit correspondre au nombre d'éléments binaires qui y sont lus. Si une dérive en fréquence existe entre le prélèvement des bits de la mémoire tampon 80 et leur inscription, la différence $\Delta\Phi_{moy}$, considérée comme la moyenne de la valeur $\Delta\Phi$, va croître jusqu'à un temps $t_{eV}$ si la différence $\Delta\Phi_{moy}$ est supérieure à la capacité de justification de l'affluent tributaire, une justification va être provoquée et diminuer cette différence d'une unité. Puis cette moyenne va croître à nouveau. Cette erreur fluctue dans le temps en fonction, notamment, des dérives de fréquence précitées et entraîne l'apparition de composantes basse fréquence dans son spectre. Ces composantes sont difficiles à traiter au niveau réception.

Conformément à l'invention, pour supprimer ou atténuer dans une grande mesure ces composantes basse fréquence au moyen de l'asservissement de phase du circuit de désynchronisation 31, le système de l'invention utilise un modulateur sigma-delta en tant que circuit de justification 92. Un tel modulateur nécessite un seuil de 0,5. Pour cela, le système comporte un organe d'interpolation 95 (cf. figure 4) pour fournir des pas intermédiaires $\Phi_{10}$ pour chaque variation du code de comparaison. Dans le cadre de l'exemple décrit, on propose dix pas intermédiaires pour qu'une erreur de un bit soit évaluée par dix de ces pas intermédiaires. Ainsi la valeur de seuil peut devenir égale à 0,5. Ces pas intermédiaires sont appliqués à un additionneur 97 qui additionne ces pas avec les variations $\Delta\Phi$ préalablement multipliées par 10 au moyen d'un multiplicateur 98 de sorte que le seuil devient en fait Sb = 5.

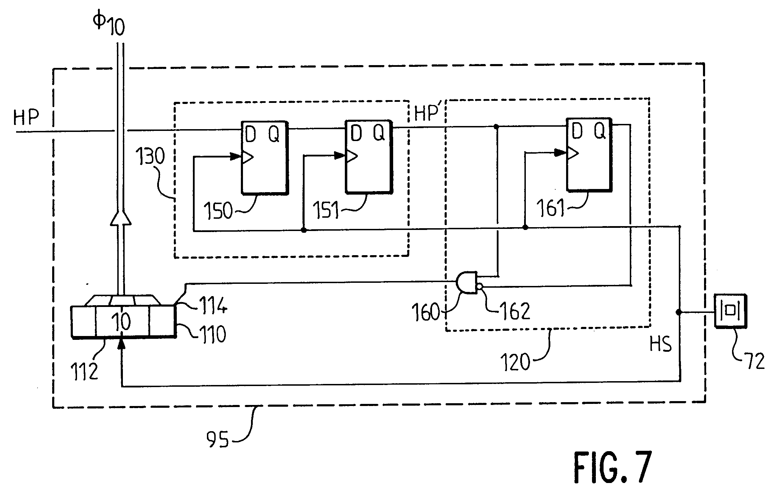

Cet organe d'interpolation 95 est montré plus en détail à la figure 7. Il est formé essentiellement par un compteur 110 qui compte modulo 10. Ce compteur est muni d'une entrée de comptage 112 pour compter les signaux HS de l'horloge 72 à 19,44 Mhz qui est très près d'être égale à dix fois la valeur de HP à 2,048 Mhz et qui a l'avantage d'être fournie par l'horloge système 72. Ce compteur 110 est aussi muni d'une entrée de remise à zéro 114 pour être remis à zéro à partir de l'indication de chaque front montant du signal d'horloge HP. Ce front est détecté par un circuit détecteur de front montant 120 précédé par un circuit de mise en phase 130 qui aligne dans le temps les changements de valeur du signal HP sur le signal HS. Ce signal HP aligné est indiqué par la référence HP'. Le circuit 130 est formé de deux bascules 150 et 151 de type D montées en cascade. L'entrée D de la bascule 150 reçoit le signal HP et la sortie Q de la bascule 151 fournit la valeur de HP alignée sur le signal HS qui est appliqué aux entrées d'horloge de ces bascules 150 et 151. Ce montage en cascade évite les phénomènes parasites (métastabilité) qui surgissent en cas de simultanéité de changement de valeurs aux entrées D et d'horloge des bascules.

Pour détecter les fronts montants, on dispose une porte ET portant la référence 160 aux entrée et sortie d'une autre bascule 161 montée en cascade avec la bascule 151. La porte ET est munie d'une entrée inverseuse 162 de sorte que cette porte ET fournit un signal logique "1" actif lorsqu'avant un front actif du signal HS la valeur du signal HP' est nulle et qu'après la valeur est "1". Ceci traduit bien l'apparition d'un front montant HP. La valeur des pas intermédiaires $\Phi_{10}$ est fournie par les sorties en parallèle du compteur 110.

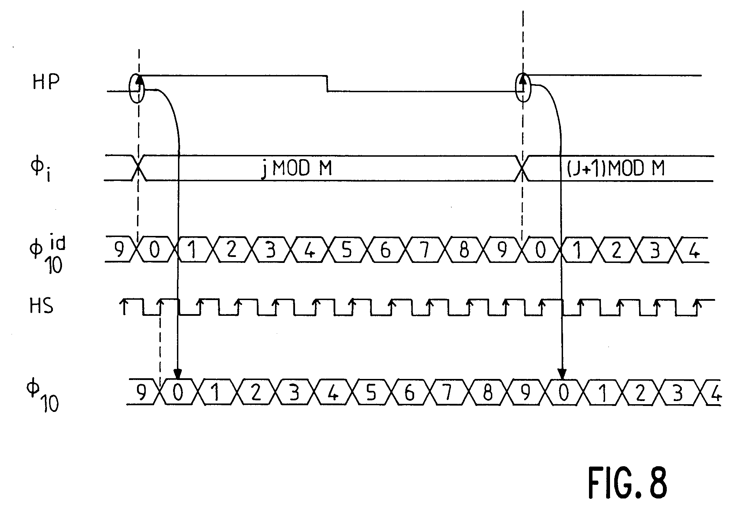

La figure 8 montre un diagramme temps du fonctionnement du circuit 30. les signaux HP, $\Phi_i$, HS et $\Phi_{10}$ ont déjà été mentionnés. Sur cette figure, on notera que la quantité $\Phi_i$ change de valeur sur les fronts montants du signal HP. Selon l'invention, on propose de subdiviser, en dix parties égales, l'intervalle de temps qui sépare le changement de valeur de cette quantité $\Phi_i$. Ceci est montré à la ligne $\Phi_{10}^{id}$ qui représente cette subdivision d'une manière idéale. Selon un aspect de l'invention, on profite, pour faire cette subdivision, du rapport des fréquences $f_{HS}$ et $f_{HP}$ des signaux HS et HP respectivement. En effet ce rapport est :

$$\frac{f_{HS}}{f_{HP}} = \frac{19,44}{2,048} = 9,49 \cong 10$$

Bien que cette subdivision effectuée par le signal HS (ligne $\Phi_{10}$) ne soit qu'une approximation, elle est suffisante pour l'application envisagée.

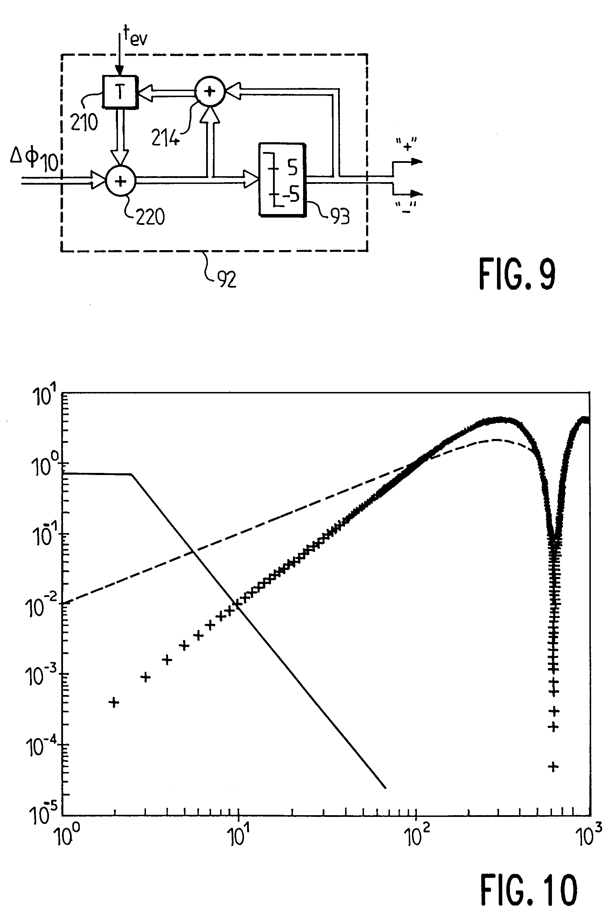

La figure 9 explicite schématiquement le circuit de commande de justification 92, compte tenu des mesures préconisées par l'invention. Ce circuit évalue aux instants $t_{ev}$, toutes les 500 µs les valeurs $\Delta\Phi_{10}$. Un circuit de mémorisation 210 déclenché par les signaux $t_{ev}$ emmagasine les signaux de sortie d'un additionneur 214 dont les deux entrées sont reliées respectivement à l'entrée et à la sortie du circuit à seuil 93. L'entrée du circuit à seuil est reliée à la sortie d'un circuit additionneur 220. On dérive des fils de sortie du circuit à seuil deux fils qui transmettent les signaux représentatifs de la fonction de seuil. Un premier fil "+", lorsqu'il transmet un signal actif, indique que le seuil positif (+5) est dépassé et donc qu'une justification négative doit être déclenchée et le second fil "-" relatif à une justification positive indique que le signal d'erreur est en dessous du seuil négatif (-5) et donc qu'une justification positive doit être déclenchée. Ce circuit 92 amène une fonction de filtrage qui atténue le bruit vers la composante continue en centrant le bruit restant vers la fréquence d'échantillonnage apportée par le signal $t_{ev}$. Ce circuit constitue donc le modulateur sigma-delta précité.

La figure 10 montre bien les avantages apportés par l'invention. Cette figure représente en tirets la caractéristique de transfert pour laquelle aucune mesure préconisée par l'invention n'est appliquée. En d'autres termes, la différence du contenu des compteurs $\Delta\Phi$ est appli-

quée directement à l'organe à seuil. La caractéristique de transfert représentée avec des petites croix est relative à l'invention. La caractéristique passe-bas d'un dispositif d'asservissement de phase rattaché à un utilisateur est représentée en trait plein. On voit que du côté des basses fréquences, les mesures apportées par l'invention apportent un affaiblissement important, surtout dans le domaine de ladite caractéristique passe-bas.

**Revendications**

1. Système de transmission impliquant des données transmises à un premier rythme et un flux d'éléments binaires pouvant être justifié transmis à un deuxième rythme, système comportant :

   - un accès des données entrantes formées d'éléments binaires fournis au premier rythme d'horloge,
   - un accès pour fournir au deuxième rythme d'horloge, ledit flux dans lequel des éléments binaires peuvent être insérés ou supprimés,
   - une mémoire tampon
   - des moyens d'écriture pour inscrire, à un emplacement d'écriture de la mémoire tampon, les données provenant dudit accès de données entrantes au premier rythme,
   - des moyens de lecture pour lire, à un emplacement de lecture de la mémoire tampon, les données emmagasinées au deuxième rythme et pour constituer ledit flux,
   - des moyens de comparaison d'emplacements pour fournir un code de comparaison des codes d'emplacement de lecture avec les codes d'emplacement d'écriture,
   - des moyens de justification pour insérer et ou supprimer des éléments binaires dans le flux de données sortantes, en fonction du code de comparaison, caractérisé en ce que les moyens de comparaison comportent :
   - un organe d'interpolation pour fournir des valeurs intermédiaires entre chaque variation du code de comparaison,
     et en ce que les moyens de justification sont munis
   - d'un organe de décision présentant un seuil de décision qui est prévu pour commander une justification et dont la valeur peut être une des valeurs intermédiaires.

2. Système de transmission selon la revendication 1 caractérisé en ce que les moyens de justification sont formés à partir d'un circuit connu sous le nom : modulateur sigma-delta.

3. Equipement de multiplexage-démultiplexage impliquant des données transmises à un premier rythme et un flux d'éléments binaires pouvant être justifié transmis à un deuxième rythme, équipement comportant au moins un dispositif de remise en phase comprenant :

   - un accès des données entrantes formées d'éléments binaires fournis au premier rythme d'horloge,
   - un accès pour fournir au deuxième rythme d'horloge, ledit flux dans lequel des éléments binaires peuvent être insérés ou supprimés,
   - une mémoire tampon
   - des moyens d'écriture pour inscrire, à un emplacement d'écriture de la mémoire tampon, les données provenant dudit accès de données entrantes au premier rythme,
   - des moyens de lecture pour lire, à un emplacement de lecture de la mémoire tampon, les données emmagasinées au deuxième rythme et pour constituer ledit flux,
   - des moyens de comparaison d'emplacements pour fournir un code de comparaison des codes d'emplacement de lecture avec les codes d'emplacement d'écriture,
   - des moyens de justification pour insérer et ou supprimer des éléments binaires dans le flux de données sortantes, en fonction du code de comparaison, caractérisé en ce que les moyens de comparaison comportent
   - un organe d'interpolation pour fournir des valeurs intermédiaires entre chaque variation du code de comparaison,
     et en ce que les moyens de justification sont munis
   - d'un organe de décision présentant un seuil de décision qui est prévu pour commander une justification et dont la valeur peut être une des valeurs intermédiaires.

4. Equipement de multiplexage-démultiplexage selon la revendication 3 caractérisé en ce que les moyens de justification sont formés à partir d'un circuit connu sous le nom : modulateur sigma-delta.

5. Dispositif de remise en phase comprenant :

   - un accès de données entrantes formées d'éléments binaires fournis à un premier rythme d'horloge,
   - un accès pour fournir à un deuxième rythme d'horloge, un flux pouvant être justifié dans lequel des éléments binaires peuvent être insérés ou supprimés,
   - une mémoire tampon
   - des moyens d'écriture pour inscrire, à un emplacement d'écriture de la mémoire tampon, les données provenant dudit accès de données entrantes au premier rythme,
   - des moyens de lecture pour lire, à un emplacement de lecture de la mémoire tampon, les données emmagasinées au deuxième rythme et pour constituer ledit flux,

- des moyens de comparaison d'emplacements pour fournir un code de comparaison des codes d'emplacement de lecture avec les codes d'emplacement d'écriture,
- des moyens de justification pour insérer et ou supprimer des éléments binaires dans le flux de données sortantes, en fonction du code de comparaison, caractérisé en ce que les moyens de comparaison comportent
- un organe d'interpolation pour fournir des valeurs intermédiaires entre chaque variation du code de comparaison, et en ce que les moyens de justification sont munis
- d'un organe de décision présentant un seuil de décision qui est prévu pour commander une justification et dont la valeur peut être une des valeurs intermédiaires.

6. Dispositif de remise en phase selon la revendication 5 caractérisé en ce que les moyens de justification sont formés à partir d'un circuit connu sous le nom : modulateur sigma-delta.

FIG. 1

EP 0 702 465 A1

**FIG. 2**

FIG. 3

EP 0 702 465 A1

FIG. 4

FIG. 5

FIG. 6

11

FIG.7

FIG.8

FIG. 9

FIG. 10

Office européen
des brevets

**RAPPORT DE RECHERCHE EUROPEENNE**

Numero de la demande

EP 95 20 2420

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 461 703 (PHILIPS) 18 Décembre 1991 <br> * colonne 4, ligne 34 - colonne 5, ligne 16; figure 4 * <br> --- | 1-6 | H04J3/07 |
| A | EP-A-0 584 636 (ALCATEL NV) 2 Mars 1994 <br> * colonne 1, ligne 35 - ligne 45 * <br> * colonne 3, ligne 26 - ligne 55 * <br> * colonne 7, ligne 5 - colonne 8, ligne 9; figure 1 * <br> --- | 1,3,5 | |
| A | EP-A-0 503 657 (NIPPON ELECTRIC CO) 16 Septembre 1992 <br> * colonne 4, ligne 58 - colonne 5, ligne 39; figure 4 * <br> --- | 1,3,5 | |
| A | EP-A-0 404 268 (PHILIPS PATENTVERWALTUNG ;PHILIPS NV (NL)) 27 Décembre 1990 <br> * colonne 2, ligne 45 - colonne 3, ligne 55 * <br> * colonne 6, ligne 35 - ligne 52; figure 1 * <br> --- | 1,3,5 | |
| A | EP-A-0 492 549 (ALCATEL ITALIA) 1 Juillet 1992 <br> * colonne 4, ligne 4 - ligne 40; figures 2-4 * <br> --- | 1-6 | DOMAINES TECHNIQUES RECHERCHES (Int.Cl.6) <br> H04J <br> H04L |
| A | ELEKTROSVYAZ, DEC. 1972, USSR, <br> vol. 26, no. 12, Décembre 1972 ISSN 0013-5771, <br> pages 15-20, <br> ABUGOV G P ET AL 'Secondary systems with pulse-code modulation' <br> * page 19, ligne 1 - ligne 18; figure 1 * <br> ----- | 1-6 | |

Le présent rapport a été établi pour toutes les revendications

| Lieu de la recherche | Date d'achèvement de la recherche | Examinateur |
|---|---|---|
| LA HAYE | 19 Décembre 1995 | Pieper, T |